Europäisches Patentamt

European Patent Office

Office européen des brevets

(11) Publication number: **0 168 016**
A2

# EUROPEAN PATENT APPLICATION

(21) Application number: 85108453.3

(22) Date of filing: 08.07.85

(51) Int. Cl.⁴: **H 01 K 1/32**
H 01 K 1/34, H 01 K 9/08

(30) Priority: 09.07.84 US 629131

(43) Date of publication of application:
15.01.86 Bulletin 86/3

(84) Designated Contracting States:
BE DE FR GB NL

(71) Applicant: GTE Products Corporation
100 West 10th Street
Wilmington, DE 19801(US)

(72) Inventor: Gagnon, Peter R.
65 1/2 Searle St.
Georgetown, Mass.(US)

(72) Inventor: Levin, Robert E.
40 Crescent Rd.
So. Hamilton, Mass.(US)

(74) Representative: Lemke, Jörg-Michael, Dipl.-Ing.
Wolframstrasse 9
D-8900 Augsburg(DE)

(54) Tungsten-halogen lamp including diffusing means as part thereof.

(57) A low wattage tungsten-halogen lamp having a base, a tungsten-halogen capsule secured to the base, the capsule including a first envelope and a filament structure axially located within the first envelope. A second envelope is located substantially about the first envelope and is secured to the base of the lamp. The lamp further includes light diffusing means located within the lamp for diffusing the light emitted by the filament structure. The light diffusing means includes diffusing surfaces formed within the first and second envelopes. The preferable method of forming the diffusing surfaces is by chemical etching.

FIG. 2

EP 0 168 016 A2

## TUNGSTEN-HALOGEN LAMP INCLUDING DIFFUSING MEANS
## AS PART THEREOF

### CROSS REFERENCE TO CO-PENDING APPLICATIONS

In co-pending Application filed under Attorney's Docket No. 83-1-122 ("Replacement Lamp With Means For Spacing," English et al), there is defined a lamp having spacer means as part thereof for maintaining the lamp and a lamp unit cover in a spaced-apart relationship when the lamp is in a lamp unit.

In co-pending Application filed under Attorney's Docket No. 83-1-125 ("Low Wattage Tungsten-Halogen Lamp," English et al), there is defined a low wattage tungsten-halogen lamp with an improved filament structure having a pair of selectively activated filaments, the coil spacing of each filament being greater about the central portion of each filament than at the opposed end portions thereof.

Both of the above Applications are filed concurrently herewith and are assigned to the same assignee as the instant invention.

### TECHNICAL FIELD

The present invention relates in general to incandescent light sources and particularly those utilized in combination with a reflector-type lamp unit (e.g., miner's cap lamp unit).

## BACKGROUND

Lamp units which form part of a miner's cap are known in the art and typically include a small, low wattage incandescent lamp as part thereof. Such a lamp typically includes a base, a bulb, and a pair of tungsten filaments of the cross-axis, coil type located within the bulb. Typically, lamps of this type operate at below about 15 watts and provide only about 40 to 50 lumens of light when powered by a low voltage source (e.g., four-volt battery). When this type of lamp is utilized in the reflector-housing of the cap's lamp unit, the resulting light output may be considered unacceptable (e.g., too low) for the environment in which the unit is designed to operate. To overcome this problem, there is defined in the aforementioned co-pending Application under Attorney's Docket No. 83-1-122 a miner's cap lamp unit which includes a tungsten-halogen lamp therein. Such a lamp operates in accordance with the known principles of most tungsten-halogen lamps to provide a relatively high (bright) output deemed satisfactory for darkened mine lighting environments. However, when such a lamp is utilized in a typical reflector (e.g., having specular reflecting surfaces) associated with such miner's cap units, the resulting light output may, in fact, be considered too bright for some particular applications. In addition, the resulting beam width coverage may be considered too narrow for such applications.

It is believed, therefore, that a tungsten-halogen lamp which can be utilized in a miner's cap reflector-type lamp unit or the like and which provides for effective diffusion of the light emitted therefrom would constitute a significant advancement in the art. Such a lamp is deemed an even further advancement if it can be readily utilized as a replacement component in known miner's cap units or the like without the need for substantial modification to the unit (e.g., altering the reflector to provide a diffusing surface thereon).

## DISCLOSURE OF THE INVENTION

Therefore, it is a primary object of this invention to enhance the art of incandescent lamps and particularly those utilized in combination with reflector-type lamp units (e.g., miner's cap lamp units).

It is another object of the invention to provide a tungsten-halogen lamp which includes as part thereof means for diffusing the light therefrom.

It is still another object of the invention to provide such a lamp as defined above which can be satisfactorily utilized in reflector-type lamp units without the need for modification of the unit's reflector and/or light-transmitting cover member.

In accordance with one aspect of the instant invention, there is provided an electric lamp comprising a base, a tungsten-halogen capsule secured to the base, the capsule including a first envelope with an inert gas fill and a halogen disposed therein, a filament structure axially located within the first envelope and supported by the base, a second envelope disposed substantially about the first envelope and secured to the base, the light emitted from the filament structure passing through the first and second envelopes when the electric lamp is in operation, and light diffusing means located within the electric lamp for diffusing the light emitted by the filament structure.

In accordance with another aspect of the present invention, there is provided a lamp unit comprising a housing, a reflector positioned within the housing and defining an open end, a light-transmitting member for providing a cover for the open end, and an electric lamp positioned within the housing, the lamp including a base, a tungsten-halogen capsule secured to the base, the capsule having a first envelope with an inert gas fill and a halogen disposed therein, a filament structure axially located within the first envelope and supported by the base, the lamp further including a second envelope disposed substantially about the first envelope and secured to the base, the light emitted from the filament structure passing through the first and second envelopes when the lamp is in operation, and light diffusing means located within the lamp unit for diffusing the light emitted by the filament structure.

## BRIEF DESCRIPTION OF THE DRAWINGS

FIG. 1 illustrates one example of a prior-art incandescent lamp;

FIG. 2 shows one embodiment of an electric lamp member of this invention;

FIG. 3 shows another embodiment of the electric lamp made in accordance with the teachings of the present invention;

FIG. 4 shows a lamp unit utilizing one embodiment of the electric lamp made in accordance with the teachings of the present invention; and

FIG. 5 shows a graph that illustrates how the light beam intensity and the beam width of the light projected from the lamp unit vary as diffusing surfaces are formed within the envelopes of the electric lamp of the present invention.

## BEST MODE FOR CARRYING OUT THE INVENTION

For a better understanding of the present invention together with other and further objects, advantages and capabilities thereof, reference is made to the following disclosure and appended claims in conjunction with the above described drawings.

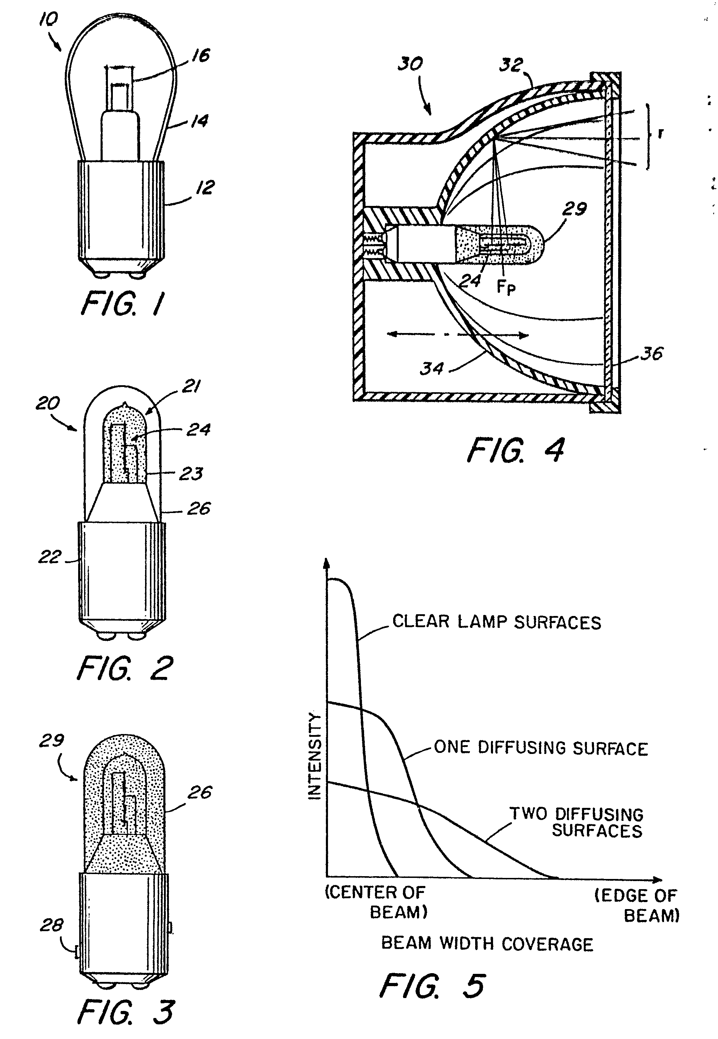

With reference now to the drawings, there is shown in FIG. 1 one example of a small, low wattage incandescent lamp 10, found in the prior art, for use in a lamp unit. Lamp 10 includes a base 12, a clear envelope 14 and a pair of tungsten filaments 16 of the cross-axis, coil type. Due to the use of large filaments (causing a high dispersion of light) and a low coil temperature (resulting in a lower color temperature) along the length of filaments 16, the visible radiation from a lamp such as lamp 10 appears to be low enough to obviate the need for including means for diffusing the light therefrom when electric lamp 10 is in a lamp unit.

Referring now to FIG. 2, there is shown a low-wattage double filament tungsten-halogen lamp 20. Electric lamp 20 includes a tungsten-halogen capsule 21 having a first envelope 23 being supported in a base 22. Capsule 21 further includes an inert gas fill and a halogen disposed within. A filament structure 24 is axially located within first envelope 23 and is supported by a wedge base (not shown) that is formed by the press-seal end of envelope 23. A second envelope 26, supported by base 22 protectively and subtantially encloses capsule 21 and its associated first envelope 23. The light emitted from filament structure 24 passes through envelopes 23 and 26 when electric lamp 20 is in operation. In FIG. 3, bayonet lugs 28 can be provided on base 22 to allow electric lamp 20 to be fitted in a lamp unit.

The lamp of the present invention is meant to replace presently utilized conventional incandescent lamps used in low-wattage lamp fixtures. However, the coil size and orientation of this lamp is substantially different from that of known lamps, which in turn may result in a different lighting distribution. The light emitted from the electric lamp mentioned above in co-pending Application having Attorney's Docket No. 83-1-125 appears to be brighter than prior art lamps due to the higher color temperature resulting from the higher coil temperature.

In some particular applications (i.e., mine lighting), it is desirable to provide for some type of diffusion of the bright light output. To adjust for this, electric lamp 20 includes means for diffusing the light therefrom, the light diffusing means being located within lamp 20. To form the diffusing surfaces, first envelope 23 (see FIG. 2) and/or second envelope 26 (see FIG. 3) may be chemically etched, sandblasted or otherwise treated either entirely or selectively.

FIG. 2 illustrates electric lamp 20 having envelope 23 with a diffusing surface formed within and a clear second envelope 26. FIG. 3 illustrates electric lamp 29 having envelopes 23 and 26 with diffusing surfaces in order to further diffuse the light provided by capsule 21. The dual envelope configuration aids in diffusing the light provided by a small low wattage incandescent lamp without unnecessarily contaminating the atmosphere within capsule 21 by attempting to form an internal diffusing surface within envelope 23. The diffusing surfaces are preferably formed on the external surface of envelope 23 and the internal surface of envelope 26. An external diffusing surface may also be formed within envelope 26 for further diffusion of light.

Reference is made to FIG. 4, showing the embodiment in FIG. 3 of electric lamp 29 in a lamp unit 30. A lamp housing 32 supports an adjustable specular reflector 34, and furthermore supports at the front thereof a light-transmitting cover member 36. Adjustable reflector 34 allows for the positioning of the reflector's focal point, Fp, over axial filament structure 24. The intensity of rays r using electric lamp 29 are lower than the intensity of rays from an electric lamp of this type not having the diffusing surfaces. If more light diffusion is desired, a diffusing surface may be formed within cover member 36 or reflector 34 may be stippled to disperse the light emitted from electric lamp 29.

FIG. 5 illustrates, by use of a graph, the effect that the diffusing surfaces of the electric lamp of the present invention have on light beam intensity and width of the beam coverage emitted from a lamp unit (such as in FIG. 4). The parameters of the graph consist of "Intensity" of light versus "Beam Width Coverage." From the graph it is noticed that a light beam emitted by a lamp unit using lamp 29 appears to have its greatest intensity and narrowest beam width coverage when envelopes 23 and 26 of electric lamp 29 are clear. As each diffusing surface is formed, the intensity of the beam is lowered while the width of beam coverage is enhanced.

Thus, there has been shown and described an improved tungsten-halogen lamp including diffusing means as part thereof for diffusing the light provided by the lamp having high luminance and a high color temperature. The electric lamp of the present invention includes two envelopes with light diffusing means located within the lamp for diffusing the light emitted by its filament structure. This allows for varying degrees of light diffusion, which in turn allows for variance of the light beam intensity and beam width coverage when the lamp is used in a reflector-type lamp unit. The diffusing surfaces are preferably formed by chemical etching and are formed within the external surface of the first envelope and the internal surface of the second envelope of the electric lamp of the present invention.

While there have been shown and described what are at present considered the preferred embodiments of the invention, it will be obvious to those skilled in the art that various changes and modifications may be made therein without departing from the scope of the invention as defined by the appended claims.

CLAIMS

WHAT IS CLAIMED IS:

1. An electric lamp comprising:

a base;

a tungsten-halogen capsule secured to said base, said capsule including a first envelope with an inert gas fill and a halogen disposed therein;

a filament structure axially located within said first envelope and supported by said base;

a second envelope disposed substantially about said first envelope and secured to said base, the light emitted from said filament structure passing through said first and second envelopes when said electric lamp is in operation; and

light diffusing means located within said electric lamp for diffusing the light emitted by said filament structure.

2. The electric lamp according to Claim 1 wherein said light diffusing means includes a diffusing surface formed within said first envelope.

3. The electric lamp according to Claim 1 wherein said light diffusing means includes a diffusing surface formed within said second envelope.

4. The electric lamp according to Claim 1 wherein said light diffusing means includes diffusing surfaces formed within said first and second envelopes.

5. The electric lamp according to Claim 4 wherein said diffusing surfaces are formed within an external surface of said first envelope and an internal surface of said second envelope.

6. The electric lamp according to Claim 2 wherein said diffusing surface is formed by sandblasting.

7.. The electric lamp according to Claim 3 wherein said diffusing surface is formed by chemical etching.

8. The electric lamp according to Claim 3 wherein said diffusing surface is formed by sandblasting.

9. The electric lamp according to Claim 4 wherein said diffusing surfaces are formed by chemical etching.

10. The electric lamp according to Claim 5 wherein said external diffusing surface of said first envelope and said internal diffusing surface of said second envelope are formed by chemical etching.

11.  A lamp unit comprising:

a housing;

a reflector positioned within said housing and defining an open end;

a light-transmitting member for providing a cover for said open end; and

an electric lamp positioned within said housing, said lamp including a base, a tungsten-halogen capsule secured to said base, said capsule having a first envelope with an inert gas fill and a halogen disposed therein, a filament structure axially located within said first envelope and supported by said base, said lamp further including a second envelope disposed substantially about said first envelope and secured to said base, the light emitted from said filament structure passing through said first and second envelopes when said lamp is in operation, and light diffusing means located within said lamp unit for diffusing the light emitted by said filament structure.

12.  The lamp unit according to Claim 11 wherein said light diffusing means includes a diffusing surface formed within said first envelope.

13.  The lamp unit according to Claim 11 wherein said light diffusing means includes a diffusing surface formed within said second envelope.

14.  The lamp unit according to Claim 11 wherein said diffusing surfaces are formed within an external surface of said first envelope and an internal surface of said second envelope.

FIG. 1

FIG. 2

FIG. 3

FIG. 4

FIG. 5